# EUROPÄISCHE PATENTSCHRIFT

(11) **EP 0 870 663 B1**
(45) Veröffentlichungstag und Bekanntmachung des Hinweises auf die Patenterteilung: **21.04.2004**
(21) Anmeldenummer: 97122700.4
(22) Anmeldetag: 22.12.1997
(51) Int. Cl.: B61F 5/24, B61F 5/14, B60G 21/073

(54) **Hydraulische Schwingungsdämpferanordnung**
Hydraulic vibration-absorbing device
Système hydraulique d'absorption de vibrations

(30) Priorität: 09.04.1997 DE 19714745
(43) Veröffentlichungstag der Anmeldung: 14.10.1998
(73) Patentinhaber: ZF Sachs AG, 97424 Schweinfurt (DE)
(72) Erfinder: Weber, Johannes, 53809 Ruppichteroth (DE)

(56) Entgegenhaltungen:
- DE-A- 2 315 427
- DE-A- 2 410 166
- DE-B- 1 176 693

## Beschreibung

Die Erfindung bezieht sich auf ein Drehgestell eines Schienenfahrzeuges mit einer hydraulischen Schwingungsdämpferanordnung, mit mindestens zwei parallel angeordneten Schwingungsdämpfern, wobei jeder Schwingungsdämpfer einen mit Dämpfungsmittel gefüllten Arbeitszylinder und einen an einer Kolbenstange befestigten Arbeitskolben aufweist, wobei die Arbeitsräume mindestens eines Schwingungsdämpfers auf der einen Seite der Längsachse des Drehgestelles hydraulisch mit den Arbeitsräumen mindestens eines weiteren Schwingungsdämpfers auf der anderen Seite der Längsachse des Drehgestelles verbunden sind, wobei bei Drehschwingungen zur Erzielung einer Dämpfung jeweils die komprimierenden und jeweils die expandierenden Arbeitsräume miteinander verbunden sind.

Es sind bereits derartige Schwingungsdämpferanordnungen bekannt (DE-AS 24 10 166), wobei jeder Schwingungsdämpfer einen in einem ölgefüllten Arbeitszylinder von außen verschiebbaren Arbeitskolben enthält, der einen deckelseitigen und einen bodenseitigen Arbeitsraum voneinander trennt. Die Arbeitsräume bieder Schwingungsdämpfer sind durch Leitungen hydraulisch kreuzweise miteinander verbunden. Da die Kolbenstangen durch den gesamten Arbeitszylinder hindurch verlaufend angeordnet sind, ist die große axiale Baulänge der Schwingungsdämpfer als Nachteil anzusehen, da in den meisten heutigen Schienenfahrzeugen ein derart benötigter Raumbedarf nicht mehr vorhanden ist. Durch die Führung der Kolbenstange auf jeder Stirnseite des Arbeitszylinders ergibt sich die große Baulänge deshalb, da durch die zweite Führung die Kolbenstange den benötigten Hub zweifach ausführen muss. Des weiteren ist von Nachteil, dass der Arbeitskolben für die eine Druckrichtung Rückschlagventile aufweist und für die entgegengesetzte Zugrichtung eine Dämpfungskraft ausführt werden große Mengen von Dämpfungsmittel in Umlauf gebracht, da sie in der Wirkrichtung des Rückschlagventils die gesamte hydraulische Verbindung durchlaufen müssen.

Es sind darüber hinaus Stabilisierungseinrichtungen, insbesondere zur Dämpfung der Wankbewegungen von Schienenfahrzeugen (z. B. DE-AS 11 76 693) bekannt, bei denen mittels zweier hydraulischer Teleskopdämpfer, von denen je einer auf jeder Fahrzeugseite angeordnet ist und deren durch den Kolben voneinander getrennte zylinderdeckelseitig äußere und zylinderbodenseitig innere Arbeitsräume kreuzweise durch Leitungen miteinander verbunden sind. Ein derartiges Stabilisierungssystem soll über ein Gaspolster Druckspitzen abfedem können. Durch die Verwendung von Gaspolstern ist ein derartiges System bei der Anwendung als Drehhemmung funktionslos, da sich das Gaspolster komprimieren lässt (Federung), so dass sich damit keine Schwingungen in Längsrichtung eines Drehgestelles abbauen lassen.

Ein Drehgestell eines Schienenfahrzeuges mit einer Schwingungsdämpferanordnung nach dem Oberbegriff des Anspruchs 1 ist aus der Druckschrift DE 23 15 427 A bekannt.

Aufgabe der Erfindung ist es, eine Schwingungsdämpferanordnung, insbesondere für Schienenfahrzeuge zu schaffen, bei der auch bei Anwendung von im wesentlichen Standardschwingungsdämpfem eine Reduzierung der Baulänge und eine Entkoppelung von Schwingungen in Richtung der Längsachse erzielt werden kann.

Zur Lösung dieser Aufgabe ist erfindungsgemäß vorgesehen, dass die hydraulische Verbindung des Schwingungsdämpfers derart geschaltet ist, dass bei Parallelschwingungen im Drehgestell ein druckloser Austausch von Dämpfungsmittel zwischen den Arbeitsräumen und die Aufnahme des Volumens der eintauchenden Kolbenstange in einem Ausgleichsraum des jeweiligen Schwingungsdämpfers erfolgt, dabei sind die Schwingungsdämpfer als Zweirohrdämpfer mit einseitig aus dem Arbeitszylinder austretender Kolbenstange und einem über Ventile im Boden verbundenen Ausgleichsraum ausgebildet, wobei die Ausgleichsräume mindestens eines auf der einen Seite der Längsachse des Drehgestelles angeordneten Schwingungsdämpfers hydraulisch mit einem auf der gegenüberliegenden Seite angeordneten Schwingungsdämpfer verbunden sind.

Bei dieser Ausführung ist von Vorteil, dass bei Parallelschwingungen, das heißt eine parallele Bewegung des Drehgestells im Verhältnis zum Wagenkasten in den Schwingungsdämpfern keine Dämpfungskraft aufgebaut wird, sondern es erfolgt ein druckloser Austausch des Dämpfungsmittels zwischen den Arbeitsräumen. Es ist bei dieser Ausführung jeweils ein expandierender Arbeitsraum mit einem komprimierenden Arbeitsraum verbunden.

Vorteilhaft ist die Erzielung einer kurzen Baulänge und die Beibehaltung einer entsprechenden Dämpfkraft so dass bei der Verwendung von Zweirohrdämpfem als Horizontaldämpfer mit Bodenventil keine zusätzliche Vorrichtung zur Aufnahme von Differenzölmengen erforderlich ist, wobei die Differenzölmengen in den Fällen auftreten, wenn die Kolbenstange in den Arbeitsraum eintaucht und ein entsprechendes Volumen verdrängt. Darüber hinaus wird die Baulänge des Schwingungsdämpfers begrenzt, da bei einem Zweirohrdämpfer nur die einmalige Hublänge zur Verfügung stehen muss.

Bei Drehschwingungen ist von Vorteil, das heißt bei Bewegungen des Drehgestells relativ zum Wagenkasten, dass jeweils zwei komprimierende Arbeitsräume und jeweils zwei expandierende Arbeitsräume miteinander in Verbindung stehen. Es wird dabei ein gleiches Druckniveau auf gleiche Arbeitsflächen der jeweils links und rechts von der Wagenmitte angeordneten Schwingungsdämpfer, so dass sich eine symmetrische Dämpfungskraft im jeweiligen Schwingungsdämpfer auf den beiden Drehgestellseiten einstellt. Die gleiche Wirkung gilt für eine entgegengesetzte Drehbewegung des Drehgestells im Verhältnis zum Wagenkasten.

Nach einer weiteren wesentlichen Ausgestaltung ist vorgesehen, dass die Schwingungsdämpfer diametral gegenüberliegend angeordnet sind, und dass die Befestigung der Kolbenstange an einem, mit dem Drehgestell verbundenen Wagenkasten parallel zum Drehpunkt und in etwa rechtwinkelig zur Längsachse des Wagenkastens erfolgt, während die Befestigung der Schwingungsdämpfer über ihre Böden mit dem Drehgestell jeweils entgegengesetzt vom Drehpunkt weg gerichtet vorgesehen ist, und dass die hydraulische Verbindung jeweils zwischen den kolbenstangenseitigen und den bodenseitigen Arbeitsräumen vorgesehen ist. Bei dieser Anordnung ist von Vorteil, dass bei Parallelschwingungen sich die Arbeitskolben des Schwingungsdämpfers jeweils in der gleichen Längsrichtung bewegen, und dass damit der kolbenstangenseitige Arbeitsraum der einen Seite sich komprimiert, während der kolbenseitige Arbeitsraum der entgegengesetzten Fahrzeugseite expandiert. Bei den bodenseitigen Arbeitsraumen verhält es sich im Prinzip gleich, so dass keine Dämpfungskraft aufgebaut wird. Dies ändert sich jedoch, wenn das Drehgestell im Verhältnis zum Wagenkasten eine Drehbewegung um einen Drehpunkt ausführt

Eine weitere wesentliche Ausführungsform sieht vor, dass bei Anordnung der Schwingungsdämpfer jeweils auf der gleichen Seite, bezogen auf eine rechtwinkelig zur Längsachse, durch den Drehpunkt verlaufenden, gedachten Linie die hydraulische Verbindung jeweils zwischen einem kolbenstangenseitigen und einem bodenseitigen Arbeitsraum verläuft. Um bei einer derartigen Anordnung die gleichen Vorteile zu erzielen, nämlich keine Dämpfung bei Parallelschwingungen, und eine Dämpfung bei Schlingerbewegungen des Drehgestells, dass heißt bei Drehbewegungen zu erzielen, werden die Arbeitsräume bei einer derartigen Anordnung kreuzweise ausgeführt. Das heißt, dass jeweils ein kolbenstangenseitiger Arbeitsraum mit einem bodenseitigen Arbeitsraum des benachbarten Schwingungsdämpfers verbunden ist.

Bevorzugte Ausführungsbeispiele der Erfindung sind in den Zeichnungen schematisch dargestellt.

Es zeigt:
- Fig. 1: eine Ausführungsform, bei der die Schwingungsdämpfer diametral gegenüberliegend angeordnet sind;
- Fig. 2: die in Figur 1 dargestellte Anordnung, jedoch mit insgesamt vier Schwingungsdämpfem jeweils diametral gegenüberliegend angeordnet;
- Fig. 3: eine Ausführung, mit vier Schwingungsdämpfem, bei denen jeweils zwei Schwingungsdämpfer auf der einen Seite des Drehpunktes und zwei weitere Schwingungsdämpfer auf der anderen Seite des Drehpunktes angeordnet sind.

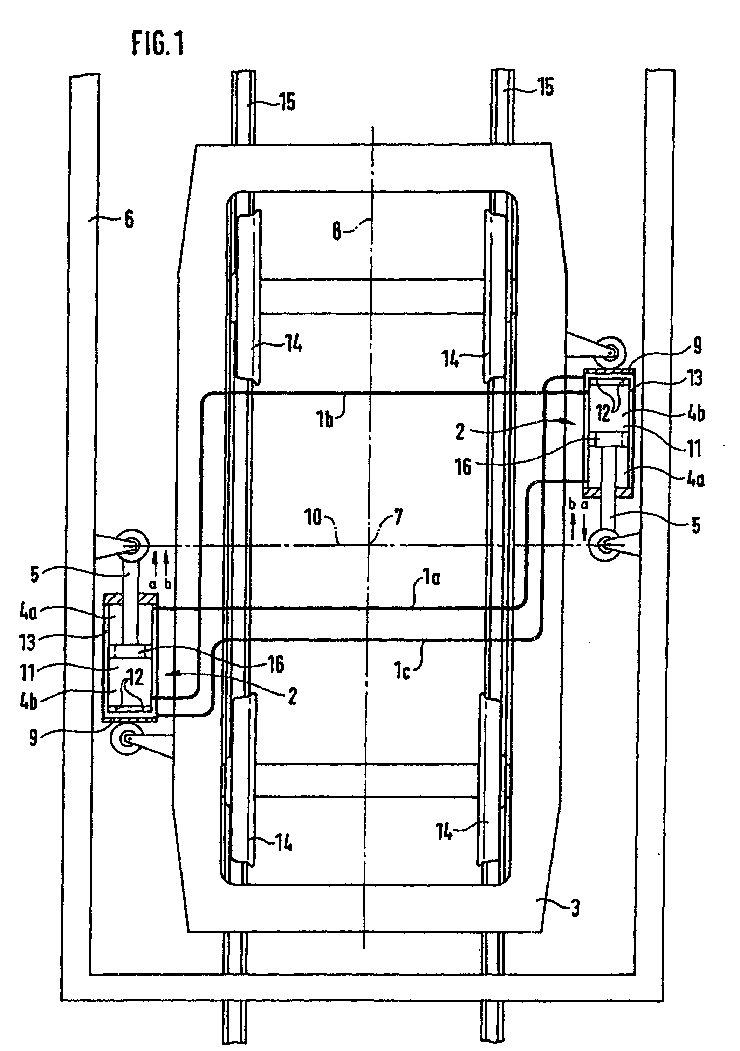

Aus der Fig. 1 ist schematisch eine hydraulische Schwingungsdämpferanordnung zu entnehmen, bei der im wesentlichen ein Drehgestell 3 über Achsen mit Rädern 14 in Verbindung stehen. Diese Räder lassen sich auf Schienen 15 entsprechend bewegen. Auf dem Drehgestell 3 ist der Wagenkasten 6 montiert, wobei dieser Wagenkasten 6 stark schematisiert dargestellt ist. Zwischen dem Drehgestell 3 und dem Wagenkasten 6 sind über entsprechende Anlenkpunkte Schwingungsdämpfer 2 auf jeder Seite des Schienenfahrzeuges montiert.

Die Schwingungsdämpfer 2 bestehen im einzelnen aus einem Arbeitszylinder 11, der über einen an einer Kolbenstange 5 befestigten Arbeitskolben in einzelne Arbeitsräume 4 unterteilt wird. Die Kolbenstange 5 ragt aus dem Arbeitszylinder 11 hinaus, während auf der gegenüberliegenden Seite, im Boden 9 des Schwingungsdämpfers 2 Ventile 12 zur Verbindung eines der Arbeitsräume mit einem Ausgleichsraum 13 vorgesehen sind. '

Die kolbenstangenseitig angeordneten Arbeitsräume 4a des jeweiligen Schwingungsdämpfers sind über eine hydraulische Verbindung 1 a miteinander verbunden. Die bodenseitigen Arbeitsräume 4b des jeweiligen Schwingungsdämpfers 2 verwenden die hydraulische Verbindung 1b, während die Ausgieichsräume 13 über die hydraulische Verbindung 1c einen Dämpfungsmittelausgleich herbeiführen.

Der Arbeitskolben 16 des jeweiligen Schwingungsdämpfers 2 besitzt sowohl für die Zug- wie auch die Druckstufe entsprechende Dämpfungsventile.

Da die Schwingungsdämpfer 2 diametral dem Drehpunkt 7 gegenüberliegend angeordnet sind, erfolgt bei Schwingungen parallel zur Längsachse 8 ein Ausgleich des Dämpfungsmittels der beiden Arbeitsräume 4a sowie 4b, ohne dass dabei eine Dämpfungswirkung aufgebaut wird. Der sich komprimierende Arbeitsraum 4 fördert das Dämpfungsmittel in einen expandierenden Arbeitsraum, so dass die Dämpfungsventile 16 des Arbeitskolbens nicht in Wirkung treten. Bei Drehbewegungen um den Drehpunkt 7 des Drehgestelles 3 gegenüber dem Wagenkasten 6 verschiebt sich die Linie 10 aus dem rechten Winkel gegenüber der Längsachse 8, so dass dann über die hydraulischen Verbindungen 1 jeweils zwei komprimierende Arbeitsräume und jeweils zwei expandierende Arbeitsräume 4 zusammenwirken. In diesem Fall muss das Dämpfungsmittel über die Ventile im Arbeitskolben 16 verdrängt und gedämpft werden. Es werden demnach Schwingungen in Richtung der Längsachse 8 des Wagenkastens 6 von der Dämpfung entkoppelt, während Schlingerbewegungen, das heißt Drehbewegungen um den Drehpunkt 7 gedämpft und damit abgebaut werden.

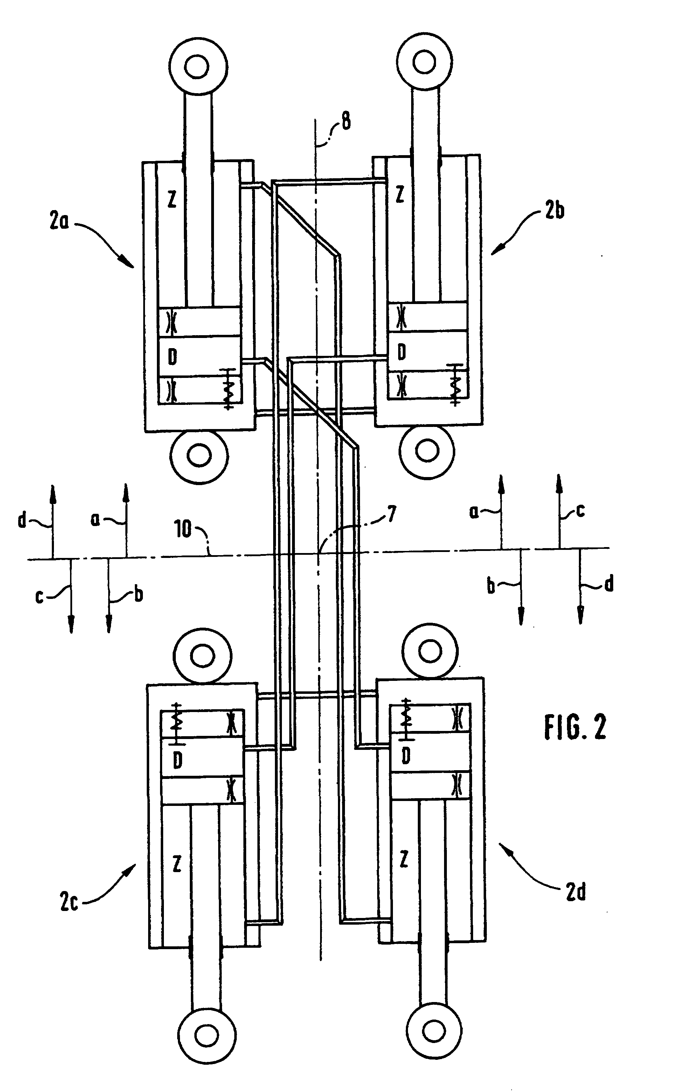

Aus der Fig. 2 ist das Prinzip der Fig. 1 schematisch dargestellt. Es entspricht dem Beispiel gemäß Fig. 1, mit dem Unterschied, dass insgesamt vier Schwingungsdämpfer 2 vorgesehen sind, wobei die Schwingungsdämpfer 2a und 2d sowie 2b und 2c miteinander über hydraulische Verbindungen 1 in Verbindung stehen.

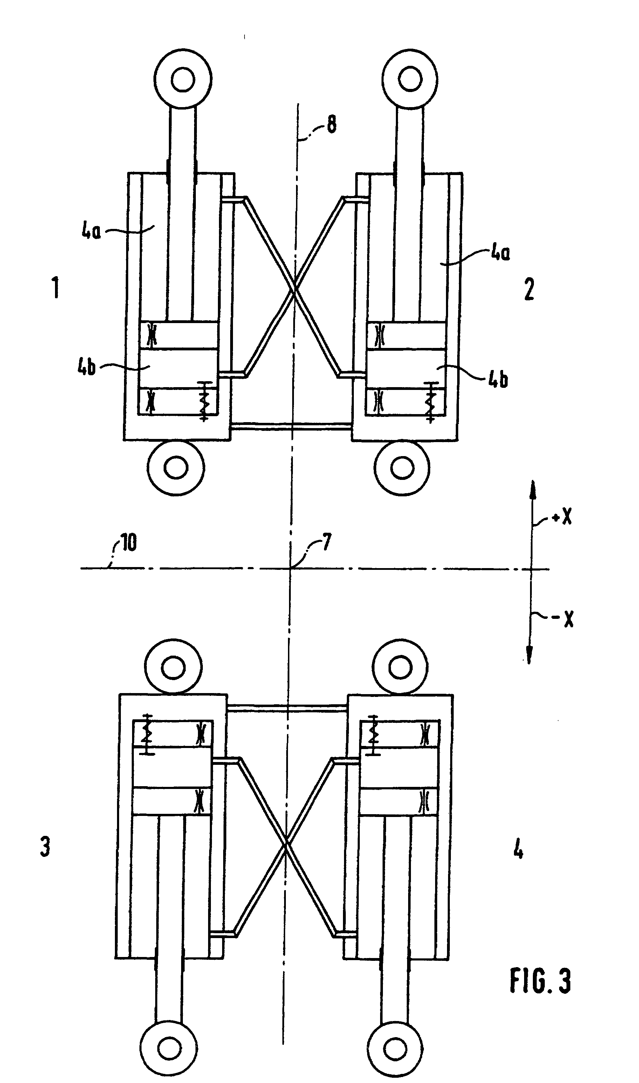

Die gleiche Funktion der Dämpfung und der Entkopplung wird durch eine Anordnung gemäß Fig. 3 erzielt, indem beide Schwingungsdämpfer auf der gleichen Seite des Drehpunktes angeordnet sind. Bei diesem Ausführungsbeispiel muss jedoch jeweils ein kolbenstangenseitiger Arbeitsraum 4a mit einem bodenseitigen Arbeitsraum 4b verbunden werden, damit bei Parallelschwingungen ein komprimierender Arbeitsraum mit einem expandierenden Arbeitsraum ohne Aufbau einer Dämpfungskraft verbunden ist. Bei Drehschwingungen dagegen wird jeweils ein Arbeitsraum 4a und der gegenüberliegende Arbeitsraum 4b komprimiert bzw. expandiert, so dass die Dämpfung über die Dämpfungsventile im Arbeitskolben 16 aufgebaut wird.

### Bezugszeichenliste

- 1.: hydraulische Verbindung
- 2.: Schwingungsdämpfer
- 3.: Drehgestell
- 4.: Arbeitsraum
- 5.: Kolbenstange
- 6.: Wagenkasten
- 7.: Drehpunkt
- 8.: Längsachse
- 9.: Boden
- 10.: Linie
- 11.: Arbeitszylinder
- 12.: Ventile im Boden
- 13.: Ausgleichsraum
- 14.: Räder
- 15.: Schienen
- 16.: Arbeitskolben

## Patentansprüche

1. Drehgestell eines Schienenfahrzeuges mit einer hydraulischen Schwingungsdämpferanordnung mit mindestens zwei parallel angeordneten Schwingungsdämpfern (2), wobei jeder Schwingungsdämpfer (2) einen mit Dämpfungsmittel gefüllten Arbeitszylinder (11) und einen an einer Kolbenstange (5) befestigten Arbeitskolben (16) aufweist, wobei die Arbeitsräume mindestens eines Schwingungsdämpfers (2) auf der einen Seite der Längsachse (8) des Drehgestelles (3) hydraulisch mit den Arbeitsräumen (4) mindestens eines weiteren Schwingungsdämpfers (2) auf der anderen Seite der Längsachse (8) des Drehgestelles verbunden sind, wobei bei Drehschwingungen zur Erzielung einer Dämpfung jeweils die komprimierenden und jeweils die expandierenden Arbeitsräume (4) miteinander verbunden sind,
**dadurch gekennzeichnet,**
**dass** die hydraulische Verbindung (1) der Schwingungsdämpfer (2) derart geschaltet ist, dass bei Parallelschwingungen im Drehgestell (3) ein druckloser Austausch von Dämpfungsmittel zwischen den Arbeitsräumen (4) erfolgt, dabei sind die Schwingungsdämpfer (2) als Zweirohrdämpfer mit einseitig aus dem Arbeitszylinder (11) austretender Kolbenstange (5) und einem über Ventile (12) im Boden (9) verbundenen Ausgleichsraum (13) ausgebildet, wobei die Ausgleichsräume (13) mindestens eines auf der einen Seite der Längsachse (8) des Drehgestelles (3) angeordneten Schwingungsdämpfer (2) hydraulisch mit einem auf der gegenüberliegenden Seite angeordneten Schwingungsdämpfer (2) verbunden sind, womit die Aufnahme des Volumens der eintauchenden Kolbenstange im Ausgleichsraum (13) des jeweiligen Schwingungsdämpfers erfolgen kann.

2. Drehgestell nach Anspruch 1,
**dadurch gekennzeichnet,**
**dass** die Schwingungsdämpfer (2) diametral gegenüberliegend angeordnet sind, und dass die Befestigung der Kolbenstange (5) an einem, mit dem Drehgestell (3) verbundenen Wagenkasten (6), parallel zum Drehpunkt (7) und in etwa rechtwinkelig zur Längsachse (8) des Wagenkastens (6) erfolgt, während die Befestigung des Schwingungsdämpfers (2) Ober ihre Böden (9) mit dem Drehgestell (3) jeweils entgegengesetzt vom Drehpunkt (7) weg gerichtet vorgesehen ist, und dass die hydraulische Verbindung (1) jeweils zwischen den kolbenstangenseitigen (4a) und den bodenseitigen Arbeitsräumen (4b) vorgesehen ist.

3. Drehgestell nach Anspruch 1,
**dadurch gekennzeichnet,**
**dass** bei Anordnung der Schwingungsdämpfer (2) jeweils auf der gleichen Seite, bezogen auf eine rechtwinklig zur Längsachse (8), durch den Drehpunkt (7) verlaufenden, gedachten Linie (10) die hydraulische Verbindung (1) jeweils zwischen einem kolbenstangenseitigen (4a) und einem bodenseitigen Arbeitsraum (4b) verläuft.

## Claims

1. Bogie of a rail vehicle having a hydraulic vibration damper arrangement having at least two vibration dampers (2) which are arranged in parallel, each vibration damper (2) having a working cylinder (11) which is filled with damping agent and a working piston (16) which is attached to a piston rod (5), the working spaces of at least one vibration damper (2) being hydraulically connected, on the one side of the longitudinal axis (8) of the bogie (3), to the working spaces (4) of at least one further vibration damper (2) on the other side of the longitudinal axis (8) of the bogie, in each case the compressing working spaces (4) and the expanding working spaces (4) being connected to one another in the case of rotary vibrations in order to bring about damping, **characterized in that** the hydraulic connection (1) of the vibration dampers (2) is switched in such a way that when there are parallel vibrations in the bogie (3) a pressureless exchange of damping agent takes place between the working spaces (4) and the volume of the dipping piston rod is accommodated in the equalization space (13) of the respective vibration damper, the vibration dampers (2) being embodied as two-pipe dampers with a piston rod (5) which emerges from the working cylinder (11) on one side, and an equalization space (13) which is connected via valves (12) in the bottom (9), the equalization spaces (13) of at least one vibration damper (2) which is arranged on the one side of the longitudinal axis (8) of the bogie (3) being hydraulically connected to a vibration damper (2) which is arranged on the opposite side.

2. Vibration damper arrangement according to Claim 1, **characterized in that** the vibration dampers (2) are arranged diametrically opposite one another, and **in that** the piston rod (5) is attached to a wagon body (6) which is connected to the bogie (3), parallel with the pivot (7) and approximately at right angles to the longitudinal axis (8) of the wagon body (6), while the attachment of the vibration damper (2) to the bogie (3) via its bottoms (9) is provided in each case directed in the opposite direction away from the pivot (7), and **in that** the hydraulic connection (1) is provided in each case between the piston-rod-side working spaces (4a) and the bottom-side working spaces (4b).

3. Vibration damper arrangement according to Claim 1, **characterized in that** when the vibration dampers (2) are each arranged on the same side, with respect to an imaginary line (10) running through the pivot (7) at right angles to the longitudinal axis (8), the hydraulic connection (1) runs in each case between a piston-rod-side working space (4a) and a bottom-side working space (4b).

## Revendications

1. Boggie pour véhicule ferroviaire doté d'un agencement d'amortisseurs hydrauliques de vibrations qui comporte au moins deux amortisseurs de vibrations (2) disposés en parallèle, chaque amortisseur de vibrations (2) présentant un cylindre de travail (11) rempli d'un fluide d'amortissement et un piston de travail (16) fixé à une tige de piston (5), les chambres de travail d'au moins un amortisseur de vibrations (2) situé sur un côté de l'axe longitudinal (8) du boggie (3) étant reliées hydrauliquement aux chambres de travail (4) d'au moins un autre amortisseur de vibrations (2) situé de l'autre côté de l'axe longitudinal (8) du boggie, les chambres de travail (4) en compression et respectivement en extension étant reliées l'une à l'autre pour obtenir un amortissement dans le cas de vibrations en torsion,
**caractérisé en ce que** la liaison hydraulique (1) entre les amortisseurs de vibrations (2) est branchée de telle sorte qu'en cas d'oscillations parallèles du boggie (3), il s'effectue un échange sans perte de charge de fluide d'amortissement entre les chambres de travail (4) et la reprise du volume de la tige de piston qui s'enfonce dans la chambre de compensation (13) de l'amortisseur de vibrations concerné, les amortisseurs de vibrations (2) étant alors configurés comme amortisseurs à deux tubes avec d'un côté la tige de piston (5) qui sort du cylindre de travail (11) et une chambre de compensation (13) reliée au fond (9) par des soupapes (12), les chambres de compensation (13) d'au moins un amortisseur de vibrations (2) disposé sur un côté de l'axe longitudinal (8) du boggie (3) étant reliées hydrauliquement à un amortisseur de vibrations (2) situé du côté opposé.

2. Agencement d'amortisseurs de vibrations selon la revendication 1, **caractérisé en ce que** les amortisseurs de vibrations (2) sont situés en positions diamétralement opposées et **en ce que** la fixation de la tige de piston (5) sur un caisson de voiture (6) relié au boggie (3) s'effectue parallèlement au centre de rotation (7) et sensiblement à la perpendiculaire de l'axe longitudinal (8) du caisson de voiture (6), tandis que la fixation de l'amortisseur de vibrations (2) par son fond (9) au boggie (3) est prévue de manière à être orientée chaque fois de manière à s'éloigner du centre de rotation (7), et **en ce que** la liaison hydraulique (1) est chaque fois prévue entre la chambre de travail (4a) située du côté de la tige de piston et la chambre de travail (4b) située du côté du fond.

3. Agencement d'amortisseurs de vibrations selon la revendication 1, **caractérisé en ce que** lorsque les amortisseurs de vibrations (2) sont tous situés d'un même côté de la ligne imaginaire (10) qui est perpendiculaire à l'axe longitudinal (8) et qui passe par le centre de rotation (7), la liaison hydraulique (1) s'étend chaque fois entre une chambre de travail (4a) située du côté de la tige de piston et une chambre de travail (4b) située du côté du fond.
